Europäisches Patentamt

European Patent Office

Office européen des brevets

(11) Veröffentlichungsnummer: **0 334 229**
**A1**

## (12) EUROPÄISCHE PATENTANMELDUNG

(21) Anmeldenummer: 89104793.8

(22) Anmeldetag: 17.03.89

(51) Int. Cl.4: **E01C 13/00 , E01C 7/10 , C04B 28/22**

(30) Priorität: 22.03.88 DE 3809581

(43) Veröffentlichungstag der Anmeldung:
27.09.89 Patentblatt 89/39

(84) Benannte Vertragsstaaten:
**AT BE CH FR LI LU NL**

(71) Anmelder: OTTO, Werner
**Waldspitze 23**
**D-8503 Altdorf(DE)**

(72) Erfinder: OTTO, Werner
**Waldspitze 23**
**D-8503 Altdorf(DE)**

(74) Vertreter: Böhme, Volker, Dipl.-Ing. et al
**Patentanwälte Dipl.-Ing. E. Kessel Dipl.Ing. V.**
**Böhme Karolinenstrasse 27**
**D-8500 Nürnberg 1(DE)**

(54) Pulvergemisch für eine Tennisplatz-Deckschicht und Verfahren zum Nachbessern der Deckschicht.

(57) Es gibt ein Pulvergemisch, das 5 - 25 Gew.% Bindemittel und 95 - 75 Gew.% zerkleinertes Naturgestein enthält und das einen Kleinanteil unter 20 $\mu$m umfaßt. Dabei ist es erwünscht, wenn die langzeitige Verdichtung der Deckschicht verringert ist. Dies ist erreicht, indem das Bindemittel zu 30 - 70 Gew.% gebrannter Kalk und zu 70 - 30 Gew.% ein Puzzolan ist, indem die maximale Korngröße des Bindemittels 1,6 mm und des Naturgesteins 2 mm ist und indem der Kleinanteil unter 20 $\mu$m maximal 2 Gew.% ausmacht. Durch das gewählte Bindemittel und die eingestellte Kornverteilung ist, unter Wahrung wiederholbarer Verfestigung durch Wasserzugabe, die Wasserduchlässigkeit über eine verlängerte Zeitspanne gewährleistet.

EP 0 334 229 A1

## Pulvergemisch für eine Tennisplatz-Deckschicht und Verfahren zum Nachbessern der Deckschicht

Die Erfindung betrifft ein Pulvergemisch für eine Tennisplatz-Deckschicht, das 5 - 25 Gew.% Bindemittel und 95 - 75 Gew.% zerkleinertes Naturgestein enthält und das einen Kleinanteil unter 20 μm umfaßt.

Bei einem bekannten (DE-PS 33 05 691) Pulvergemisch dieser Art ist das Bindemittel Stuckgips, wird eine maximale Korngröße von 3,15 mm zugelassen und muß der Kleinanteil unter 20 μm mindestens 5 Gew.% ausmachen. Durch das Bindemittel Stuckgips ist das Pulvergemisch bzw. die daraus hergestellte Deckschicht sauer, was den Moosbewuchs fördert, der die Deckschicht allmählich wasserdicht macht. Der wegen des Bindemittels Stuckgips nötige relativ hohe Feinanteil wandert in der Deckschicht allmählich nach unten und verdichtet die Deckschicht.

Eine Aufgabe der Erfindung ist es daher, ein Pulvergemisch der eingangs genannten Art zu schaffen, bei dem die langzeitige Verdichtung der Deckschicht verringert ist. Das erfindungsgemäße Pulvergemisch ist, diese Aufgabe lösend, dadurch gekennzeichnet, daß das Bindemittel zu 30 - 70 Gew.% gebrannter Kalk und zu 70 - 30 Gew.% ein Puzzolan ist, daß die maximale Korngröße des Bindemittels 1,6 mm und des Naturgesteins 2 mm ist, und daß der Kleinanteil unter 20 μm maximal 2 Gew.% ausmacht.

Durch das aus gebranntem Kalk und Puzzolan zusammengesetzte Bindemittel ist die Deckschicht nicht mehr sauer, so daß eine moosbedingte Verdichtung eingeschränkt wird. Wegen des gewählten Bindemittels kann der Kleinanteil sehr gering gehalten werden, so daß die kleinanteilbedingte Verdichtung enfällt. Dadurch daß die maximale Korngröße bei 1,6 mm bzw. 2 mm gehalten ist, ist die Möglichkeit zur Entmischung, d.h. die allmähliche Bildung eines grobkörnigeren oberen Bereiches der Deckschicht und eines feinkörnigeren unteren Bereiches der Deckschicht weiter vermindert. Die Puzzolane sind latenthydraulisch und werden durch den gebrannten Kalk (CaO) angeregt. Die Eigenschaft der Deckschicht, bei wiederholter Wasserzugabe wiederholt abzubinden, ist verbessert.

Die Puzzolane sind z.B. Traß (gemahlener Tuffstein), Hochofenschlacke oder Ziegelmehl. Das verwendbare Naturgestein ist verwitterungsfest und z.B. jedes beliebige Quarzgestein; verwendbar sind Quarzporphyr, Prasinit oder Diabas. Das Pulvergemisch wird trocken auf den Tennisplatz aufgegeben und dann befeuchtet, wobei z.B. eine Wassermenge von 14 - 20 Gew.% des Pulvergemisches aufgebracht wird. Das erfindungsgemäße Pulvergemisch ist auch für Deckschichten sonstiger Sportoder Spielplätze geeignet.

Besonders zweckmäßig und vorteilhaft ist es, wenn der Kleinanteil unter 20 μm maximal 1 Gew.% ausmacht. Damit ist die Gefahr eines unerwünschten Wasserdicht-Werdens der Deckschicht weiter vermindert.

Besonders zweckmäßig und vorteilhaft ist ein Pulvergemisch, bei dem nicht über 5 Gew.% eine Körnung ≤ 32 μm, nicht über 8 Gew.% eine Körnung ≤ 63 μm und mehr als 24 Gew.% eine Körnung ≤ 25 μm haben. Durch diese Kornverteilung wird einerseits die Eigenschaft der wiederholten Abbindung verbessert und andererseits die Gefahr eines Wasserdicht-Werdens weiter gemindert.

Besonders zweckmäßig und vorteilhaft ist es, wenn das Bindemittel gewichtsmäßig jeweils ungefähr zur Hälfte gebrannten Kalk und zur Hälfte Puzzolan enthält. Diese hälftige Verteilung der beiden Bindemittelarten ist für den vorliegenden Anwendungsfall zweckmäßig.

Besonders zweckmäßig und vorteilhaft ist es sodann, wenn von dem gebrannten Kalk mindestens 20 Gew.% eine Körnung > 0,125 mm aufweist. Der gebrannte Kalk hat also einen relativ großen Anteil größerer Körnung.

Besonders zweckmäßig und vorteilhaft ist es ebenso, wenn 75 - 95 Gew.% des von gebranntem Kalk und Puzzolan gebildeten Bindemittels im Kornbereich 45 - 125 μm liegt. Dies verbessert die über lange Zeit hin wiederholbare Abbindefähigkeit.

Besonders zweckmäßig und vorteilhaft ist es auch, wenn das Pulvergemisch zusätzlich 5 - 15 Gew.% eines im Kornbereich 0,1 - 2 mm liegenden, porigen Baustoffgranulates mit einem Diffusionswiderstandsfaktor ≤ 2 μm enthält. Das porige Baustoffgranulat ist ein Elastizitätsmodulverbesserer und z.B. Bimskies, Ziegelsplitt oder Lava. Das porige Baustoffgranulat wird in der Regel zugegeben, wenn das Pulvergemisch rot sein soll und rotes Naturgestein vorgesehen wird und um die Rötung der Deckschicht zu verbessern, wobei das porige Baustoffgranulat ebenfalls rot ist.

Eine weitere Entwicklung der Erfindung besteht darin, daß auf die Deckschicht ein Bindemittel, das zu 30 -70 Gew.% aus gebranntem Kalk und zu 70 - 30 Gew.% aus Puzzolan besteht und eine Körnung 0 - 1,6 mm aufweist, aufgegeben wird und in die Deckschicht eingearbeitet wird. Eine Deckschicht aus einem erfindungsgemäßen Pulvergemisch läßt sich also noch nach Jahren nachverfestigen, indem das ursprünglich verwendete Kalk-Puzzolan-Bindemittel nachträglich oberflächlich in die Deckschicht eingebracht wird, in der es sich durch Wasserdurchtritt allmählich verteilt und die es wiederverfestigt, nachdem das ursprünglich in dem Pulvergemisch enthaltene Bindemittel seine Bindungswirkung mehr oder weniger verloren hat.

Der gebrannte Kalk ist durch die $CO_2$-Abgabe des Kalksteins beim Brennen sehr porig und nimmt daher beim Löschen begierig Wasser auf. Nach dem Zugeben des Wassers bei der Herstellung der Deckschicht tritt bereits eine physikalische Verfestigung durch Austrocknen wie bei fettem Ton auf, die für gering belastetes Mauerwerk bereits ausreichend wäre. Die eigentliche Erhärtung erfolgt jedoch durch Aufnahme von Luftkohlensäure (Karbonatisation). Die Karbonatisation läuft wegen der geringen $CO_2$-Konzentration der Luft (0,03 Vol.%), des sich um die einzelnen Körner bildenden Karbonathäutchens und der groben Kornmahlung nur langsam ab. Die vollständige Karbonatisation kann dabei viele Jahre dauern.

Die Puzzolane werden durch den gebrannten Kalk angeregt und dienen als Langzeitnachverfestiger. Dadurch ergibt sich die immer neue Verfestigung loser Teilchen. Obwohl es sich um eine gebundene Deckschicht handelt, erfüllt diese die Anforderungen der DIN 18035, Teil 5 hinsichtlich der Wasserdurchlässigkeit von Tennenbelägen für Spielfelder, Leichtathletikanlagen und Tennisfelder. Auch nach Aufnahme des maximal möglichen Wassergehaltes sperrt der Belag den Wasserdurchtritt nicht, sondern erweist sich als wasserdurchlässig. Auch nach großer Wassereinwirkung, etwa nach einem Dauerregen, wird die Deckschicht, die aus dem erfindungsgemäßen Pulvergemisch hergestellt ist, nicht weich. Sowohl nach Regenfällen, wie nach Dauerfrost ist eine baldige Bespielbarkeit gegeben.

## Ansprüche

1. Pulvergemisch für eine Tennisplatz-Deckschicht, das 5 - 25 Gew.% Bindemittel und 95 - 75 Gew.% zerkleinertes Naturgestein enthält und das einen Kleinanteil unter 20 μm umfaßt, **dadurch gekennzeichnet,** daß das Bindemittel zu 30 - 70 Gew.% gebrannter Kalk und zu 70 - 30 Gew.% ein Puzzolan ist, daß die maximale Korngröße des Bindemittels 1,6 mm und des Naturgesteins 2 mm ist und daß der Kleinanteil unter 20 μm maximal 2 Gew.% ausmacht.

2. Pulvergemisch nach Anspruch 1, **dadurch gekennzeichnet,** daß der Kleinanteil unter 20 μm maximal 1 Gew.% ausmacht.

3. Pulvergemisch nach Anspruch 1 oder 2, **dadurch gekennzeichnet,** daß nicht über 5 Gew.% eine Körnung ≤ 32 μm, nicht über 8 Gew.% eine Körnung ≤ 63 μm und mehr als 24 Gew.% eine Körnung ≤ 125 μm haben.

4. Pulvergemisch nach Anspruch 1, 2 oder 3, **dadurch gekennzeichnet,** daß das Bindemittel gewichtsmäßig jeweils ungefähr zur Hälfte gebrannten Kalk und Puzzolan enthält.

5. Pulvergemisch nach einem der vorhergehenden Ansprüche, **dadurch gekennzeichnet,** daß von dem gebrannten Kalk mindestens 20 Gew.% eine Körnung > 0,125 mm aufweist.

6. Pulvergemisch nach einem der vorhergehenden Ansprüche, **dadurch gekennzeichnet,** daß 75 - 95 Gew.% des von gebranntem Kalk und Puzzolan gebildeten Bindemittels im Kornbereich 45 - 125 μm liegt.

7. Pulvergemisch nach einem der vorhergehenden An sprüche, **dadurch gekennzeichnet,** daß es zusätzlich 5 - 15 Gew.% eines im Kornbereich 0,1 - 2 mm liegenden, porigen Baustoffgranulates mit einem Diffusionswiderstandsfaktor ≤ 2 μm enthält.

8. Verfahren zum Nachbessern einer Deckschicht, die aus einem Pulvergemisch gemäß einem der vorhergehenden Ansprüche hergestellt worden ist, **dadurch gekennzeichnet,** daß auf die Deckschicht ein Bindemittel, das zu 30 - 70 Gew.% aus gebranntem Kalk und zu 70 - 30 Gew.% aus Puzzolan besteht und eine Körnung 0 - 1,6 mm aufweist, aufgegeben wird und in die Deckschicht eingearbeitet wird.

Europäisches Patentamt

# EUROPÄISCHER RECHERCHENBERICHT

Nummer der Anmeldung

EP 89 10 4793

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 204 081 (TURBA) <br> * Zusammenfassung * <br> --- | 1 | E 01 C 13/00 <br> E 01 C 7/10 <br> C 04 B 28/22 |
| A | GB-A- 849 234 (CORSON INC.) <br> * Insgesamt * <br> --- | 1 | |
| A,D | DE-A-3 305 691 (SCHRENK) <br> * Insgesamt * <br> ----- | 1 | |

| RECHERCHIERTE SACHGEBIETE (Int. Cl.4) |
|---|
| E 01 C <br> C 04 B |

Der vorliegende Recherchenbericht wurde für alle Patentansprüche erstellt

| Recherchenort | Abschlußdatum der Recherche | Prüfer |
|---|---|---|
| DEN HAAG | 12-06-1989 | DIJKSTRA G. |